# EUROPÄISCHE PATENTSCHRIFT

(11) **EP 2 240 332 B1**
(45) Veröffentlichungstag und Bekanntmachung des Hinweises auf die Patenterteilung: **21.04.2021**
(21) Anmeldenummer: 08868208.3
(22) Anmeldetag: 17.12.2008
(51) Int. Cl.: B42D 15/00, G02B 1/11

(54) **SICHERHEITSELEMENT**
SECURITY ELEMENT
ÉLÉMENT DE SÉCURITÉ

(30) Priorität: 21.12.2007 DE 102007062121; 19.06.2008 DE 102008029158
(43) Veröffentlichungstag der Anmeldung: 20.10.2010
(73) Patentinhaber: Giesecke+Devrient Currency Technology GmbH, 81677 München (DE)
(72) Erfinder: HEIM, Manfred, 83646 Bad Tölz (DE); DICHTL, Marius, 81371 München (DE); GREGAREK, André, 81671 München (DE)
(86) Internationale Anmeldenummer: PCT/EP2008/010738
(87) Internationale Veröffentlichungsnummer: WO 2009/083145

(56) Entgegenhaltungen:
- WO-A1-01/29148
- WO-A1-97/27504
- DE-A1- 10 124 630
- DE-A1-102005 017 169
- DE-A1-102006 032 538
- GB-A- 2 325 883
- US-A1- 2007 196 616

## Beschreibung

Die Erfindung betrifft ein Sicherheitselement zur Absicherung von Wertgegenständen, ein Verfahren zur Herstellung eines derartigen Sicherheitselements, ein Wertdokument mit einem solchen Sicherheitselement.

Wertdokumente, wie etwa Banknoten, Ausweiskarten und dergleichen, werden zur Absicherung oft mit Sicherheitselementen versehen, die eine Überprüfung der Echtheit der Wertdokumente gestatten und die zugleich als Schutz vor unerlaubter Reproduktion dienen.

Dabei gewinnen zunehmend Durchsichtssicherheitsmerkmale, wie etwa Durchsichtsfenster in Banknoten, an Attraktivität. Zur Fenstererzeugung wird dabei eine auf einer Seite mit einer Kleberschicht versehene Folie auf eine Banknote aufgebracht um eine zuvor erzeugte durchgehende Öffnung der Banknote zu verschließen.

Typischerweise wird die Folie dabei mit zumindest einem Sicherheitsmerkmal, wie etwa einem Hologramm oder einer optisch variablen Beschichtung, versehen und bildet so ein Foliensicherheitselement, das als Folienpatch oder auch als Folienstreifen über die ganze Höhe einer Banknote aufgebracht werden kann. Zunehmend sind derartige Foliensicherheitselemente nur in bestimmten Teilbereichen der Folie mit optisch variablen Sicherheitselementen versehen. Beispielsweise kann ein über einem Fensterbereich liegender Teilbereich der Folie eine cholesterische Flüssigkristallschicht enthalten, während ein anderer Teilbereich ein patchartiges Hologramm trägt. Der restliche Bereich des Folienelements ist nicht metallisiert und trägt keine weiteren optisch variablen Sicherheitsmerkmale.

Aus der Druckschrift US 2007/0196616 A1 ist eine optische Komponente bekannt, die einen anisotropen Diffusor mit strukturierter Anisotropie umfasst sowie Mittel, die eine Farbverschiebung bereitstellen, die bei Änderung des Betrachtungswinkels und/oder Änderung des Einfallswinkels beobachtet werden kann.

Davon ausgehend liegt der vorliegenden Erfindung die Aufgabe zugrunde, ein Sicherheitselement der eingangs genannten Art hinsichtlich seines visuellen Erscheinungsbilds weiter zu verbessern.

Diese Aufgabe wird durch das Sicherheitselement mit den Merkmalen des Hauptanspruchs gelöst. Ein Verfahren zur Herstellung eines derartigen Sicherheitselements, ein Wertdokument und ein Verfahren zu dessen Herstellung sind in den nebengeordneten Ansprüchen angegeben. Weiterbildungen der Erfindung sind Gegenstand der abhängigen Ansprüche.

Gemäß der Erfindung weist ein gattungsgemäßes Sicherheitselement eine Schichtenfolge auf, in der in Aufsicht Merkmalsbereiche und Neutralbereiche erkennbar sind, wobei die Merkmalsbereiche zumindest ein optisch variables Sicherheitsmerkmal enthalten, und in den Neutralbereichen keine optisch variablen Sicherheitsmerkmale vorliegen, und wobei das Sicherheitselement zumindest in den Neutralbereichen mit einer reflexionsmindernden Struktur versehen ist. Durch diese Maßnahme können der vergleichsweise hohe Glanz und insbesondere die gerichtete Reflexion im Glanzwinkel, die herkömmliche Sicherheitselemente außerhalb des Merkmalsbereichs oft aufweisen, wirkungsvoll reduziert und die Aufmerksamkeit des Betrachters verstärkt auf die optisch variablen Sicherheitselemente gelenkt werden. Erfindungsgemäß ist die reflexionsmindernde Struktur durch eine Streustruktur, insbesondere eine geprägte Mattstruktur, gebildet. Die Streustruktur kann vorteilhaft durch eine Hügelstruktur gebildet sein, wobei die lateralen Abmessungen und Höhen der Hügel vorzugsweise jeweils zwischen 200 nm und 50 µm liegen. Die Streustruktur ist bevorzugt als unregelmäßige Hügelstruktur ausgebildet. Aber auch eine regelmäßige Hügelstruktur, z. B. in Form eines regelmäßigen Mikrolinsenarrays, kann sehr gut entspiegeln. Insbesondere regelmäßig angeordnete Mikrolinsen mit Durchmessern von ca. 30 µm haben sich in der Praxis zur Entspiegelung als sehr geeignet erwiesen. Alternativ kann die Streustruktur auch durch eine unregelmäßige Anordnung von Gräben gebildet sein, wobei die Tiefen der Gräben vorzugsweise jeweils zwischen 50 nm und 10 µm liegen und die Häufigkeit der Gräben im Durchschnitt zwischen 10 pro µm und 0,1 pro µm liegt.

Um eine homogene Mattierungswirkung zu erreichen, ist die azimutale Orientierung der Gräben in der Ebene des Sicherheitselements mit Vorteil zufällig verteilt. Die azimutale Orientierung der Gräben kann jedoch auch eine Vorzugsrichtung aufweisen, so dass Teilbereiche der reflexionsmindernden Struktur unter bestimmten Betrachtungsbedingungen spiegelnd wirken.

Neben den bereits genannten Streustrukturen kommen auch Subwellenlängengitter oder stochastische Subwellenlängengitter für die reflexionsmindernde Struktur in Betracht.

Erfindungsgemäß ist das Sicherheitselement nur in den Neutralbereichen, nicht aber in den Merkmalsbereichen mit einer reflexionsmindernden Streustruktur versehen, so dass die optisch variablen Effekte der Merkmalsbereiche nicht durch Lichtstreuung beeinträchtigt werden.

Ebenfalls erfindungsgemäß ist die reflexionsmindernde Struktur durch eine Entspiegelungsschicht gebildet, die sowohl in den Neutralbereichen als auch in den Merkmalsbereichen vorliegt. Nicht streuend wirkende Entspiegelungsschichten haben den Vorteil, dass sie auch vollflächig auf das Sicherheitselement aufgebracht werden können, und dass auf die genaue Anordnung der optisch variablen Sicherheitsmerkmale keine Rücksicht genommen werden muss. Eine im Wesentlichen vollflächige Entspiegelung der Oberfläche des Sicherheitselements kann vielmehr auch die Erkennbarkeit der Sicherheitsmerkmale des Merkmalsbereichs verbessern, da die optisch variablen Effekte dann weniger von Lichtreflexionen an der glatten Oberfläche gestört werden.

Die Entspiegelungsschicht kann insbesondere durch eine Prägeschicht mit einem senkrecht zur Schichtdicke kontinuierlich abnehmenden effektiven Brechungsindex gebildet sein. Eine solche Entspiegelungsschicht kann beispielsweise durch eine mikrostrukturierte Reliefstruktur mit einer Strukturgröße im Wesentlichen unterhalb der Lichtwellenlänge erzeugt werden, wobei die laterale Abmessungen und Höhen der Reliefelemente insbesondere zwischen 100 nm und 1 µm, vorzugsweise zwischen 100 nm und 500 nm liegen.

Eine deutliche Reduktion der Grenzflächenreflexion kann auch durch eine durch Ionenbeschuss erzeugte Brechzahlgradientenschicht erreicht werden. Eine solche Brechzahlgradientenschicht kann insbesondere durch Modifizieren der Oberfläche einer Polymerschicht mittels eines Argon/Sauerstoff-Plasmas erzeugt werden. Durch den Plasmaätzvorgang entsteht eine graduell zur Grenzfläche immer lockerer werdende Oberflächenschicht in der Polymerschicht, in der die Dichte und die Brechzahl kontinuierlich von der Brechzahl des Polymers bis auf die Brechzahl der Luft abnimmt. Das Plasmaätzen erfolgt vorzugsweise mit einem mit Sauerstoff versetzten DC-Argonplasma, bei dem die Energie beim Ionenbeschuss zwischen etwa 100 eV und etwa 160 eV liegt. Die erforderliche Behandlungszeit liegt typischerweise zwischen 200 Sekunden und 400 Sekunden. Die Reflexion der Grenzfläche kann durch diese Maßnahme im sichtbaren Bereich bis auf weniger als 1 % reduziert werden.

Durch ein Plasmaätzverfahren kann auch eine Subwellenlängenstruktur erzeugt und dadurch die Grenzflächenreflexion wirkungsvoll reduziert werden. Auch bei diesem Verfahren kann durch ein mit Sauerstoff versetztes DC-Argonplasma eine stochastische Nanostrukturierung einer Polymeroberfläche erzeugt werden. Dabei ergeben sich insbesondere hervorstehende, noppenartige Strukturen und unregelmäßig beabstandete Löcher in der Polymerschicht. Die genaue Form und vertikale Strukturtiefe der erhaltenen Nanostrukturierung hängt von den verwendeten Prozessparametern ab, wobei die typische Abmessungen der Noppen bei Durchmessern von 20 nm bis 80 nm und einer Höhe von 150 nm bis 500 nm liegen und typische Durchmesser der Löcher zwischen 30 nm und 80 nm liegen.

Derartige stochastische Nanostrukturen können auch als Masterstrukturen für die Herstellung von Replikationswerkzeugen dienen, mit denen eine kostengünstige Vervielfältigung, etwa durch Prägen in einem strahlenhärtbaren Prägelack oder durch Heißprägen in einem thermoplastischen Lack, möglich ist. Dazu wird eine entsprechend nanostrukturierte Oberfläche beispielsweise mit einer Goldschicht bedampft, die als Ausgangspunkt einer galvanischen Replikation eingesetzt wird. Selbstverständlich sind aber auch andere Replikationstechniken und Materialien zur Herstellung von Replikationswerkzeugen mit erfindungsgemäßen Oberflächenstrukturen geeignet. Da die stochastische Nanostrukturierung nicht nur an planaren, sondern auch auf gekrümmten und mikrostrukturierten Oberflächen vorgenommen werden kann, kann der Master auch eine übergeordnete, strukturierte Oberfläche, wie etwa beispielsweise eine Mikrolinsenanordnung, aufweisen.

Um die kratzempfindlichen Subwellenlängenstrukturen zu schützen, sind diese vorzugsweise in einer Zwischenschicht im Inneren des fertigen Sicherheitselements angeordnet.

Die vorgenannten Plasmaätzverfahren eignen sich insbesondere für acrylhaltige Polymere, wie etwa Polymethylmethacrylat (PMMA). Um auch andere Polymerklassen wirkungsvoll durch Plasmaätzen entspiegeln zu können, wird vor dem Ätzprozess eine dünne dielektrische Schicht auf die zu entspiegelnde Oberfläche aufgebracht. Dann wird für eine bestimmte Ätzzeit mit einem mit Sauerstoff versetzten DC-Argonplasma geätzt. Die erforderliche Ätzzeit hängt von der spezifischen Ätzrate des verwendeten Polymers und der Dicke der dielektrischen Schicht ab, wobei typische Ätzzeiten dabei im Bereich von 100 bis 300 Sekunden liegen. Die zusätzlich aufgebrachte dielektrische Schicht führt beim Plasmaätzen zu einem lateral selektiven Materialabtrag und damit im Ergebnis zu einer schwammartigen Textur der Polymeroberfläche. Mit dieser Vorgehensweise lässt sich die Reflexion für verschiedene Polymerklassen auf 1 % oder weniger reduzieren.

Bei einer weiteren Methode zur Entspiegelung wird eine Lackschicht des Sicherheitselements zunächst durch eine Excimerlampenbestrahlung nur an der Oberfläche ausgehärtet, wodurch sich die Oberfläche zu einer groben Mattstruktur verwirft. Anschließend wird die Lackschicht durch UV-Bestrahlung vollständig ausgehärtet.

Die beschriebenen Verfahren der Grenzflächenreduktion können sowohl zur Erzeugung einer separaten Entspiegelungsschicht genutzt werden als auch zur Erzeugung einer integrierten Entspiegelungsschicht, die Teil der Funktionsschicht(en) ist, in denen das zumindest eine optisch variable Sicherheitsmerkmal vorliegt.

In einer alternativen ebenfalls vorteilhaften Gestaltung ist die Entspiegelungsschicht durch eine dielektrische Beschichtung gebildet, beispielsweise durch eine A/4-Schicht aus einem niedrigbrechenden dielektrischen Material, insbesondere durch eine λ/4-Schicht aus Magnesiumfluorid (MgF₂) oder Siliziumdioxid (SiO₂). Anstatt durch eine Einzelschicht, kann die dielektrische Beschichtung auch durch eine Schichtenfolge aus alternierend hoch- und niedrigbrechenden dielektrischen Materialien gebildet sein.

Gemäß einer Erfindungsvariante sind die optisch variablen Sicherheitsmerkmale der Merkmalsbereiche und die reflexionsmindernde Struktur der Neutralbereiche in auf derselben Seite einer Trägerfolie angeordneten Schichten ausgebildet.

Alternativ sind die optisch variablen Sicherheitsmerkmale der Merkmalsbereiche und die reflexionsmindernde Struktur der Neutralbereiche in auf gegenüberliegenden Seiten einer Trägerfolie angeordneten Schichten ausgebildet.

Soll die Trägerfolie nicht Bestandteil des übertragenen Sicherheitselements bleiben, so werden die optisch variablen Sicherheitsmerkmale der Merkmalsbereiche mit Vorteil über der reflexionsmindernden Struktur der Neutralbereiche in auf derselben Seite einer Transferfolie angeordneten Schichten ausgebildet. Die Transferfolie kann dann nach der Übertragung des Sicherheitselements auf ein Zielsubstrat so abgezogen werden, dass die optisch variablen Sicherheitsmerkmale und die reflexionsmindernde Struktur auf dem Zielsubstrat verbleiben, wie weiter unten genauer erläutert.

Gemäß einer Weiterbildung der Erfindung kann die reflexionsmindernde Struktur auch partiell in Form von Mustern, Zeichen oder einer Codierung aufgebracht sein oder kann mit Aussparungen in Form von Mustern, Zeichen oder einer Codierung versehen sein. Die partiell aufgebrachten Bereiche bzw. die Aussparungen können dann ein verstecktes und nur aus geeigneten Betrachtungsrichtungen schwach sichtbares Bild erzeugen, das als zusätzliches Echtheitskennzeichen dienen kann.

Vorzugsweise weisen die Merkmalsbereiche ein oder mehrere Sicherheitsmerkmale auf, die ausgewählt sind aus der Gruppe, bestehend aus Hologrammen, hologrammähnlichen Beugungsstrukturen, Beugungsmustern, Strukturen mit Farbkippeffekt, Kinoforme, Strukturen mit einem Mikrolinseneffekt und Strukturen mit isotropen oder anisotropen Streuungseffekt oder mit anderen Interferenzeffekten.

Das Sicherheitselement kann auch auf seinen beiden gegenüberliegenden Seiten mit reflexionsmindernden Strukturen versehen sein. Dies bietet sich insbesondere bei Durchsichtssicherheitselementen an, die über einem Fenster oder einer durchgehenden Öffnung eines Wertdokuments angeordnet sind. Eventuelle störende Reflexe werden dann bei Betrachtung von der Ober- wie der Unterseite des Durchsichtssicherheitselements unterdrückt.

Das Sicherheitselement ist mit Vorteil ein Sicherheitsfaden, ein Sicherheitsband, ein Sicherheitsstreifen, ein Patch oder ein Etikett zum Aufbringen auf ein Sicherheitspapier, Wertdokument oder dergleichen.

Selbstverständlich kann das erfindungsgemäße Sicherheitselement zur Absicherung von Sicherheitspapieren, Wertdokumenten und dergleichen einen beliebig großen Teil und insbesondere auch im Wesentlichen das gesamte Sicherheitspapier oder Wertdokument auf einer oder auf beiden Seiten bedecken. Bei einer im Wesentlichen vollständigen Bedeckung einer oder beider Seiten des Sicherheitspapiers oder Wertdokuments werden vorteilhafterweise die auf dem Sicherheitspapier oder Wertdokument angeordneten Sicherheitsmerkmale, wie z.B. Sicherheitsdrucke, durch das erfindungsgemäße Sicherheitselement abgedeckt und somit dem Zugriff von Fälschern entzogen, was die Fälschungssicherheit des Sicherheitspapiers oder Wertdokuments weiter erhöht.

Das erfindungsgemäße Sicherheitselement zur Absicherung von Sicherheitspapieren, Wertdokumenten oder dergleichen ist entweder Bestandteil der vorgenannten Sicherheitspapiere, Wertdokumente oder wird auf den vorgenannten Sicherheitspapieren oder Wertdokumenten angeordnet. Als Substratmaterial für die genannten Sicherheitspapiere/Wertdokumente, insbesondere Banknoten, kommt jede Art von Papier in Betracht, insbesondere Baumwoll-Velinpapier. Selbstverständlich kann auch Papier eingesetzt werden, welches einen Anteil x polymeren Materials im Bereich von 0 < x< 100 Gew.-% enthält.

Weiterhin ist es grundsätzlich denkbar, wenn auch gegenwärtig nicht bevorzugt, dass das Substratmaterial des Sicherheitspapiers/Wertdokuments eine Kunststofffolie, z. B. eine Polyesterfolie, ist. Die Folie kann ferner monoaxial oder biaxial gereckt sein. Die Reckung der Folie führt unter anderem dazu, dass sie polarisierende Eigenschaften erhält, die als weiteres Sicherheitsmerkmal genutzt werden können. Sofern das Substratmaterial eine Kunststofffolie ist, kann das erfindungsgemäße Sicherheitselement mit Vorteil Bestandteil des Sicherheitspapiers/Wertdokuments sein. In einem solchen Fall ist das Sicherheitselement dann z. B. Bestandteil einer sogenannten Polymer-Banknote.

Zweckmäßig kann es auch sein, wenn das Substratmaterial ein mehrschichtiger Verbund ist, der wenigstens eine Schicht aus Papier oder einem papierartigen Material aufweist. Ein solcher Verbund zeichnet sich durch eine außerordentlich große Stabilität aus, was für die Haltbarkeit des Substrats bzw. Datenträgers von großem Vorteil ist. Z. B. kann eine Schicht aus Papier oder papierartigem Material auf beiden Seiten von einer Schicht aus einer Kunststofffolie im Wesentlichen vollständig bedeckt sein, um eine sogenannte "Folienverbundbanknote" zu bilden. Die auf beiden Seiten der Schicht aus Papier oder papierartigem Material angeordnete Kunststofffolie umfasst mit Vorteil ein oder mehrere erfindungsgemäße Sicherheitselemente oder aber schützt das oder die auf dem Papier oder der papierartigen Schicht angeordnete(n) Sicherheitselement(e) vor dem Zugriff von Fälschern. Zu erwähnen ist noch, dass die auf einer oder beiden Seiten der Schicht aus Papier oder papierartigem Material vorhandene Kunststofffolie durch an sich bekannte Techniken, wie Kleben, Kaschieren oder Extrudieren, auf der Schicht aus Papier oder papierartigem Material angeordnet wird.

Denkbar ist aber auch, als Substratmaterial ein mehrschichtiges, papierfreies Kompositmaterial einzusetzen, was vor allem bei Ausweis- und Kreditkarten sehr vorteilhaft ist. Diese Materialien können insbesondere in bestimmten Klimaregionen der Erde mit Vorteil eingesetzt werden.

Alle als Substratmaterial eingesetzten Materialien können Zusatzstoffe aufweisen, die als Echtheitsmerkmale dienen. Dabei ist in erster Linie an Lumineszenzstoffe zu denken, die im sichtbaren Wellenlängenbereich vorzugsweise transparent sind und im nicht sichtbaren Wellenlängenbereich durch ein geeignetes Hilfsmittel, z. B. eine UV- oder IR-Strahlung emittierende Strahlungsquelle, angeregt werden können, um eine sichtbare oder zumindest mit Hilfsmitteln detektierbare Lumineszenz zu erzeugen. Auch andere Sicherheitsmerkmale können mit Vorteil eingesetzt werden, sofern sie die Betrachtung der Sicherheitsmerkmale des erfindungsgemäßen Sicherheitselements nicht oder zumindest nicht wesentlich beeinträchtigen.

Die Erfindung umfasst auch ein Verfahren gemäß Anspruch 11 zum Herstellen eines Sicherheitselements für Sicherheitspapiere, Wertdokumente und dergleichen, bei dem
- eine Schichtenfolge mit in Aufsicht erkennbaren Merkmalsbereichen und Neutralbereichen erzeugt wird, wobei die Merkmalsbereiche mit zumindest einem optisch variablen Sicherheitsmerkmal erzeugt werden und in den Neutralbereichen keine optisch variablen Sicherheitsmerkmale erzeugt werden, und
- das Sicherheitselement zumindest in den Neutralbereichen mit einer reflexionsmindernden Struktur versehen wird.

Erfindungsgemäß wird dabei eine Trägerfolie bereitgestellt und es werden auf gegenüberliegenden Seiten der Trägerfolie eine erste bzw. eine zweite Schicht aufgebracht, wobei die optisch variablen Sicherheitsmerkmale der Merkmalsbereiche in der ersten Schicht und die reflexionsmindernde Struktur der Neutralbereiche in der gegenüberliegenden zweiten Schicht ausgebildet werden.

Nach einer anderen ebenfalls erfindungsgemäßen Verfahrensvariante wird eine Trägerfolie bereitgestellt, wird auf die Trägerfolie eine erste Schicht aufgebracht, in der die optisch variablen Sicherheitsmerkmale der Merkmalsbereiche ausgebildet werden, und es wird über die erste Schicht eine zweite Schicht aufgebracht, in der die reflexionsmindernde Struktur der Neutralbereiche ausgebildet wird.

Eine weitere vorteilhafte Verfahrensvariante besteht darin, dass eine Transferfolie bereitgestellt wird, auf die Transferfolie eine gut haftende erste Schicht aufgebracht wird, in der die reflexionsmindernde Struktur der Neutralbereiche ausgebildet wird, und dass auf die erste Schicht eine auf der ersten Schicht schlecht haftende zweite Schicht aufgebracht wird, in der die optisch variablen Sicherheitsmerkmale der Merkmalsbereiche ausgebildet werden.

Anstatt das Sicherheitselement erst einschließlich der reflexionsmindernden Struktur fertig zu stellen und dann auf ein gewünschtes Zielsubstrat zu übertragen, kann das Sicherheitselement auch zunächst mit einer Aufnahmeschicht für die Aufnahme der reflexionsmindernden Struktur versehen werden, das Sicherheitselement auf das Zielsubstrat übertragen werden, und die Aufnahmeschicht nach der Übertragung des Sicherheitselements auf das Zielsubstrat mit der reflexionsmindernden Struktur versehen werden. Die nachträgliche Erzeugung der reflexionsmindernden Struktur kann beispielsweise mittels einer geeignet strukturierten Druckplatte erfolgen, mit der auch der Druck weiterer Druckelemente des Zielsubstrats durchgeführt wird.

Bei allen in dieser Anmeldung beschriebenen Sicherheitselementen kann zumindest die Trägerfolie aus PET gebildet sein. Als Materialien für das erfindungsgemäße Sicherheitselement eignen sich neben PET (Polyethylentherephthalat) z. B. auch die Kunststoffe PBT (Polybutylenterephthalat), PEN (Polyethylennaphthalat), PP (Polypropylen), PA (Polyamid), PE (Polyethylen). Die eingesetzte Kunststofffolie kann ferner monoaxial oder biaxial gereckt sein.

Gegenstand der Erfindung ist weiter ein Wertdokument, wie eine Banknote, ein Pass, eine Urkunde, eine Ausweiskarte oder dergleichen, mit einem Sicherheitselement der beschriebenen Art. Das Sicherheitselement kann dabei insbesondere in oder über einem Fensterbereich oder einer durchgehenden Öffnung des Wertdokuments angeordnet sein.

Zur Herstellung eines derartigen Wertdokuments wird das Sicherheitselement auf das Wertdokument aufgebracht, insbesondere aufgeklebt. Dabei kann vorgesehen sein, dass das Sicherheitselement eine Transferfolie enthält, bei der auf derselben Seite die optisch variablen Sicherheitsmerkmale der Merkmalsbereiche und die reflexionsmindernde Struktur der Neutralbereiche ausgebildet sind, und dass die Transferfolie nach dem Aufbringen des Sicherheitselements auf das Wertdokument entfernt, insbesondere abgezogen wird.

Als weiterer Vorteil des erfindungsgemäßen Sicherheitselements ist zu erwähnen, dass das Sicherheitselement in den die reflexionsmindernde Struktur aufweisenden Bereichen in der Regel eine bessere Farbverankerung zeigt. Demzufolge können auf den die reflexionsmindernde Struktur aufweisenden Bereichen z. B. Sicherheitsdrucke aufgebracht werden, die in der Regel besser als auf den Bereichen ohne reflexionsmindernde Struktur haften. Eine bessere Haftung von Farbe ist z. B. bei Streustrukturen, insbesondere geprägten Mattstrukturen gegeben. Wird das erfindungsgemäße Sicherheitselement auf einem Sicherheitspapier oder Wertdokument angeordnet, können insbesondere die Bereiche mit der reflexionsmindernden Struktur bei guter Haftung z. B. mit Druckfarben versehen werden, wobei die Druckfarbe sich auch mit Vorteil über den Randbereich des Sicherheitselements auf das Sicherheitspapier/Wertdokument erstrecken kann.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig. 1: eine schematische Darstellung einer Banknote mit einem eine durchgehende Öffnung verschließenden holographischen Folienstreifen und einem holographischen Folienpatch,
- Fig. 2: schematisch einen Querschnitt durch die Banknote von Fig. 1 entlang der Linie II-II,
- Fig. 3: einen Querschnitt wie in Fig. 2 für ein anderes Ausführungsbeispiel der Erfindung,
- Fig. 4: ein Transferelement nach einem weiteren Ausführungsbeispiel der Erfindung, bei dem die Prägung der reflexionsmindernden Struktur erst nach dem Aufbringen des Transferelements auf das Zielsubstrat erfolgt,
- Fig. 5: in (a) und (b) Zwischenschritte bei der Erzeugung eines erfindungsgemäßen Sicherheitselements, dessen Trägerfolie nach der Übertragung auf das Zielsubstrat abgezogen wird,
- Fig. 6 und 7: weitere Ausführungsbeispiele der Erfindung, bei denen als reflexionsmindernde Strukturen Entspiegelungsschichten eingesetzt werden,
- Fig. 8: eine Abwandlung des Folienstreifens der Fig. 1, bei der die reflexionsmindernde Struktur mit Aussparungen in Form der Ziffernfolge "100" versehen ist,
- Fig. 9.: ein weiteres Beispiel, bei dem das Sicherheitsmerkmal und die reflexionsmindernde Struktur in nur einer Schicht ausgebildet sind, und
- Fig. 10: ein noch weiteres Beispiel, bei der das Sicherheitsmerkmal und die reflexionsmindernde Struktur in nur einer Schicht ausgebildet sind.

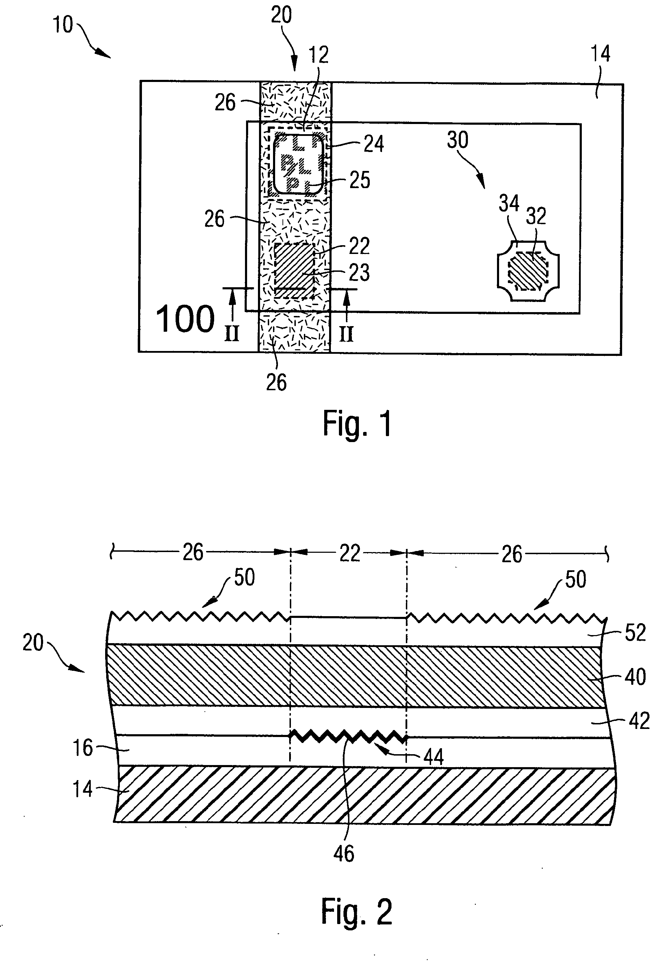

Die Erfindung wird nun am Beispiel von Sicherheitselementen für Banknoten erläutert. Fig. 1 zeigt dazu eine schematische Darstellung einer Banknote 10, die mit zwei Sicherheitselementen 20 und 30 nach Ausführungsbeispielen der Erfindung versehen ist.

Das erste Sicherheitselement stellt einen holographischen Folienstreifen 20 dar, der über die gesamte Höhe der Banknote 10 verläuft und der in einem Teilbereich eine durchgehende Öffnung 12 der Banknote verschließt. Der Folienstreifen 20 enthält zwei Merkmalsbereiche 22, 24, die jeweils mit einem optisch variablen Sicherheitsmerkmal versehen sind. In den Neutralbereichen 26 außerhalb der Merkmalsbereiche 22, 24 weist der Folienstreifen 20 keine optisch variablen Sicherheitsmerkmale auf.

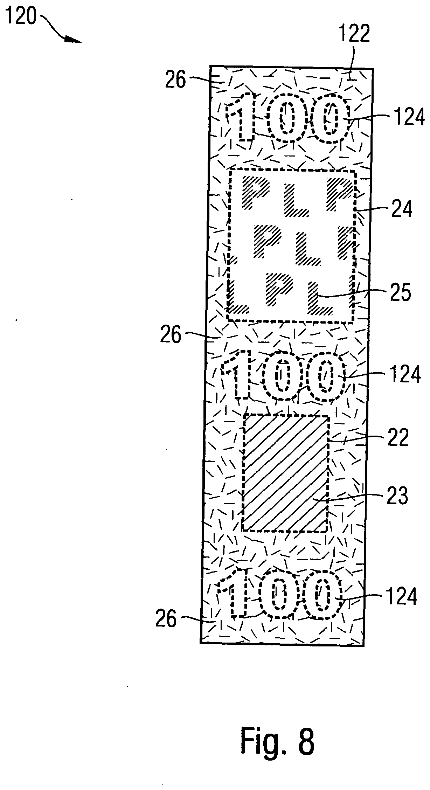

Wie bereits erwähnt, ist es grundsätzlich auch denkbar, dass das erfindungsgemäße Sicherheitselement einen großen Teil der Banknote 10 bedeckt und sich insbesondere im Wesentlichen über die gesamte Höhe und Breite der Banknote 10 erstreckt. Auch ist eine Variante denkbar, bei der sich das Sicherheitselement auf beiden Seiten der Banknote 10 im Wesentlichen über die gesamte Höhe und Breite der Banknote 10 erstreckt und in Verbindung mit dem Banknotensubstrat eine Folienverbundbanknote bildet. Des Weiteren kann das erfindungsgemäße Sicherheitselement, wie bereits erwähnt, auch Teil einer sogenannten "Polymer-Banknote" sein. Gegenwärtig sind allerdings Sicherheitselemente in Form von z. B. in Fig. 1 und Fig. 8 gezeigten Folienstreifen oder Folienpatches bevorzugt.

Im gezeigten Ausführungsbeispiel enthält der über dem Papiersubstrat 14 der Banknote 10 angeordnete erste Merkmalsbereich 22 als optisch variables Sicherheitsmerkmal ein metallisiertes Hologramm 23, während der über der durchgehenden Öffnung 12 der Banknote 10 liegende zweite Merkmalsbereich 24 ein Muster 25 aus cholesterischem Flüssigkristallmaterial enthält. Das Flüssigkristallmuster 25 erscheint im Durchlicht oder vor einem hellen Hintergrund transparent und im Wesentlichen farblos. Wird die Banknote mit der Öffnung 12 vor einem stark absorbierenden, dunklen Hintergrund betrachtet, so tritt das Flüssigkristallmuster 25 im Bereich der Öffnung 12 mit intensiven Farben deutlich sichtbar hervor. Das flüssigkristalline Material 25 liegt insbesondere in Form von Mustern, Zeichen oder Codierungen vor, wie etwa der in Fig. 1 beispielhaft gezeigten Buchstabenfolge "PL".

Das zweite Sicherheitselement stellt ein auf das Banknotenpapier 14 aufgeklebtes Folientransferelement 30 beliebiger Form dar. Auch das Folientransferelement 30 weist einen Merkmalsbereich 32 auf, der mit einem optisch variablen Sicherheitsmerkmal, wie etwa einem metallisierten Hologramm oder einer anderen hologrammähnlichen Beugungsstruktur, versehen ist. In einem Neutralbereich 34 außerhalb des Merkmalsbereichs 32 enthält das Folientransferelement 30 keine optisch variablen Sicherheitsmerkmale.

Bei herkömmlichen Folienelementen erscheinen insbesondere die nicht mit Sicherheitsmerkmalen 23, 25 versehenen Folienbereiche 26, 34 aufgrund der glatten Folienoberfläche und des relativ hohen Brechungsindexunterschieds von Folienmaterial und Luft mit einem erheblich höheren Glanz als das umgebende Banknotenpapier 14. Im Glanzwinkel kann der Folienstreifen wie die Oberfläche einer Glasplatte eine beträchtliche Reflexion zeigen und sogar spiegelnd erscheinen. Um diese von Betrachtern oft als störend empfundene Glanzwirkung zu reduzieren oder sogar vollständig zu unterdrücken, sind die Sicherheitselemente 20 und 30 in ihren Neutralbereichen 26, 34 jeweils mit reflexionsmindernden Strukturen versehen. Die Reflexionsminderung kann dabei auf verschiedenartige Weise erreicht und mit der Gestaltung der optisch variablen Sicherheitsmerkmale 23, 25 kombiniert werden, wie nachfolgend anhand einiger exemplarischer Ausführungsbeispiele erläutert.

Der entlang der Linie II-II der Fig. 1 verlaufende Querschnitt der Fig. 2 zeigt die Banknote 10 mit dem Folienstreifen 20, der nach der Übertragung auf die Banknote über eine Kleberschicht 16 mit dem Banknotenpapier 14 verbunden ist.

Der Folienstreifen 20 enthält eine transparente Trägerfolie 40, beispielsweise eine PET-Folie, die auf ihren gegenüberliegenden Hauptflächen mit Prägeschichten 42, 52 versehen ist. Das metallisierte Hologramm 23 des Merkmalsbereichs 22 ist dabei in der Prägeschicht 42 ausgebildet, die auf der Unterseite der Trägerfolie 40 angeordnet ist. Zur Herstellung des Hologramms 23 wurde in an sich bekannter Weise ein Prägelack auf die Trägerfolie 40 aufgebracht, das gewünschte Hologrammrelief 44 eingeprägt und die geprägte Reliefstruktur 44 mit einer Metallisierung 46, beispielsweise aus Aluminium, versehen. Es versteht sich, dass die Metallisierung 46 in diesem und den folgenden Ausführungsbeispielen auch mit Aussparungen versehen sein kann, die eine Negativinformation innerhalb des Hologramms 23 darstellen.

Um die Neutralbereiche 26 mit einer reflexionsmindernden Struktur zu versehen, wurde zusätzlich auf die Oberseite der Trägerfolie 40 eine Prägelackschicht 52 aufgebracht und außerhalb der Merkmalsbereiche 22, 24 eine streuende Mattstruktur 50 in die Prägelackschicht 52 eingeprägt. Als Mattstrukturen 50 können dabei im Rahmen der Erfindung verschiedene Oberflächenstrukturen zum Einsatz kommen. Besonders gut geeignet sind insbesondere unregelmäßige Hügelstrukturen, deren laterale Abmessungen und Höhen jeweils zwischen 200 nm und 50 µm liegen. Die Hügel können alle dieselbe Größe oder auch eine vorgewählte Größenverteilung aufweisen. Die Form der Hügel kann im Rahmen der Erfindung beliebig gewählt werden.

Eine derartige Hügelstruktur 50 reduziert aufgrund der Streuung des einfallenden Lichts den in den Neutralbereichen 26 unerwünschten Glanz und die gerichtete Reflexion des Folienelements im Glanzwinkel deutlich, so dass die Aufmerksamkeit des Betrachters verstärkt auf die optisch variablen Sicherheitsmerkmale der Merkmalsbereiche 22, 24 gelenkt wird. In den Merkmalsbereichen 22, 24 ist die Mattstruktur 50 ausgespart, so dass die optisch variablen Effekte durch die Lichtstreuung nicht beeinträchtigt werden.

Anstatt durch eine Hügelstruktur kann die Mattstruktur 50 auch durch geprägte Gräben mit Tiefen von weniger als 100 nm bis hin zu mehreren Mikrometern gebildet werden. Die Häufigkeit der Gräben liegt dabei im Durchschnitt bei 10 pro µm bis 0,1 pro µm.

Für eine homogene Mattierungswirkung wird die azimutale Orientierung der Gräben vorzugsweise gleich verteilt. Alternativ kann die azimutale Orientierung der Gräben auch eine Vorzugsrichtung aufweisen und nur in einem bestimmten Winkelbereich um diese Vorzugsrichtung variieren. Unter bestimmten Betrachtungsbedingungen erscheinen dann Teilbereiche des mit der Mattstruktur versehenen Folienstreifens spiegelnd, während die anderen Bereiche matt erscheinen. Eine solche Mattierung mit Vorzugsrichtung kann als zusätzliches Echtheitskennzeichen dienen.

Als weitere Gestaltungsvarianten kommen für die Mattstruktur 50 Subwellenlängengitter und stochastische Subwellenlängengitter in Betracht. Die reflexionsmindernde Wirkung derartiger Gitter beruht auf dem Zusammenspiel mehrerer Effekte, wobei die relative Bedeutung der verschiedenen Effekte insbesondere von der Art und Größe der Strukturen abhängt. Ein erster Effekt liegt darin begründet, dass sich bei einer Gitterperiode, die unterhalb der Wellenlänge des einfallenden Lichts liegt, auch bei senkrechtem Einfall nur noch die nullte Beugungsordnung ausbreiten kann. Ein zweiter Effekt lässt sich durch das Stichwort "effektives Medium" kennzeichnen und wird weiter unten genauer erläutert. Kurz gesagt, werden Strukturen einer Größe unterhalb der sichtbaren Lichtwellenlänge von sichtbarem Licht nicht gesehen, so dass sich ein derart fein strukturiertes Medium für sichtbares Licht wie ein homogenes Medium mit einem effektiven Brechungsindex verhält. Wenn sich die feinen Strukturen vom Substrat zur Luft hin verjüngen, geht der Brechungsindex des Mediums vom Brechungsindex des Substrats (n etwa 1,5) praktisch kontinuierlich in den Brechungsindex von Luft (n=1) über. An solchen Strukturen mit einem kontinuierlich abnehmenden Brechungsindex gibt es keine oder nur eine sehr schwache Reflexion.

Ein als "Lichtfalle" zu charakterisierender dritter Effekt hat besonders dann Bedeutung, wenn die reflexionsmindernden Strukturen größer als eine halbe Lichtwellenlänge und mehr als etwa 100 nm tief sind. Die Strukturen wirken für einfallendes sichtbares Licht dann wie eine Falle, in der das Licht gefangen und durch Vielfachreflexion und die mit jeder Reflexion verbundene Absorption effektiv absorbiert wird. Reichen die Subwellenlängenstrukturen in ihrer Abmessung an die Wellenlängen sichtbaren Lichts heran, so wirken die Strukturen nach einem vierten beteiligten Effekt als Streukörper, verteilen reflektiertes Licht in einen breiten Raumwinkelbereich und tragen dadurch zur entspiegelnden Wirkung bei.

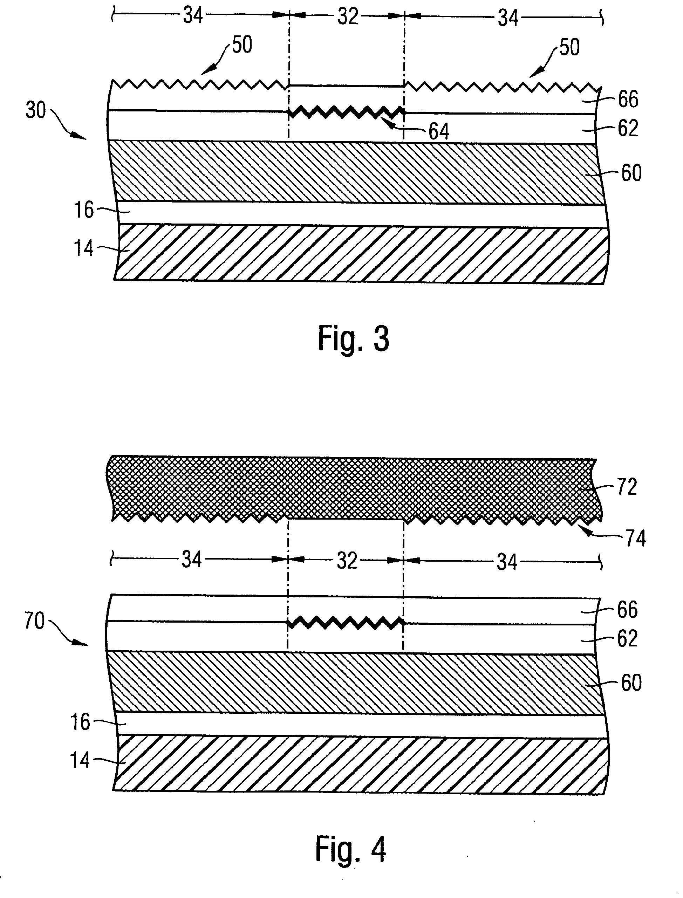

Die optisch variablen Sicherheitsmerkmale der Merkmalsbereiche und die reflexionsmindernde Struktur der Neutralbereiche können auch auf derselben Seite einer Trägerfolie 40 ausgebildet werden, wie anhand des in Fig. 3 gezeigten Querschnitts durch die Banknote 10 im Bereich des Folientransferelements 30 illustriert wird.

Das Folientransferelement 30 enthält eine transparente PET-Trägerfolie 60, auf deren Oberseite eine erste Prägelackschicht 62 aufgebracht, mit einem gewünschten Hologrammrelief 64 geprägt und metallisiert wurde, um den Merkmalsbereich 32 zu schaffen. Zur Herstellung der reflexionsmindernden Struktur des Neutralbereichs 34 wurde über die erste Prägelackschicht 62 eine zweite Prägelackschicht 66 aufgebracht und in die Prägelackschicht 66 unter Aussparung des Merkmalsbereichs 32 eine streuende Mattstruktur 50 der bereits beschriebenen Art eingeprägt. In einem späteren Verfahrensschritt wurde das fertige Transferelement 30 dann über eine Kleberschicht 16 auf das Banknotenpapier 14 übertragen, wie in Fig. 3 dargestellt.

Die Prägung der Mattstruktur 50 kann auch erst nach dem Aufbringen des Transferelements 30 oder des Folienelements 20 auf die Banknote 10 erfolgen, beispielsweise in einem späteren Druckschritt, in dem auch andere Druckelemente der Banknote 10 erzeugt werden. Mit Bezug auf Fig. 4 wird das Transferelement 70, in diesem Fall zunächst wie in Zusammenhang mit Fig. 3 beschrieben, hergestellt, allerdings ohne eine Prägung der zweiten Prägelackschicht 66 vorzunehmen. In diesem Zustand, also mit noch unstrukturiertem Neutralbereich 34, wird das Transferelement 70 auf das Banknotepapier 14 übertragen, wie in Fig. 4 dargestellt.

Zur nachträglichen Erzeugung der reflexionsmindernden Struktur wird die Druckplatte, gemäß der Fig. 4 die Stichtiefdruckplatte 72, für den Druck der übrigen Druckelemente der Banknote 10 im Neutralbereich 34 des Folienelements 70 mit Prägestrukturen 74 versehen, die der gewünschten Mattstruktur 50 entsprechen. Bei dem Stichtiefdruckschritt wird so neben dem Druck der weiteren Druckelemente der Banknote 10 auch die gewünschte Mattstruktur 50 in die Prägelackschicht 66 eingeprägt.

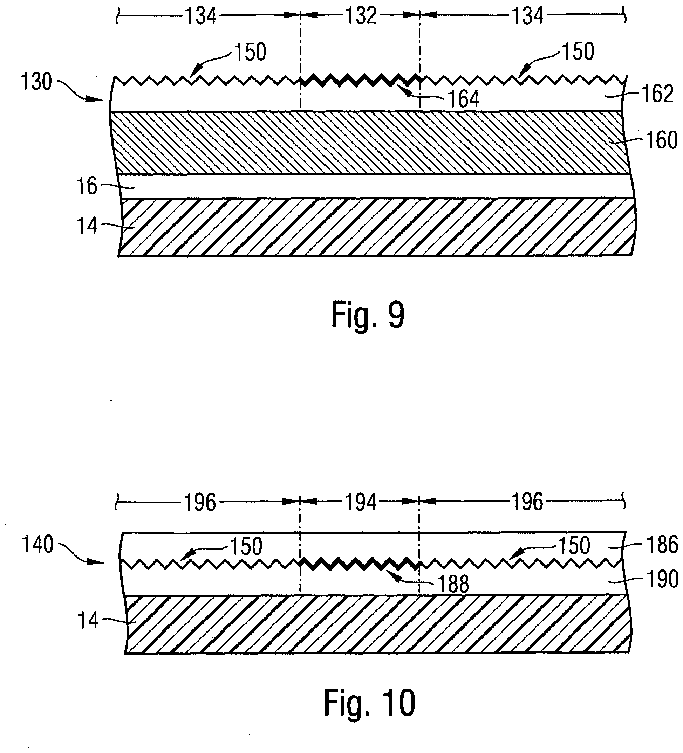

Während die in den Figuren 1 bis 4 gezeigten erfindungsgemäßen Sicherheitselemente derart ausgebildet sind, dass das zumindest eine Sicherheitsmerkmal der Merkmalsbereiche und die reflexionsmindernde Struktur der Neutralbereiche in verschiedenen Schichten ausgebildet sind, ist es grundsätzlich auch denkbar, dass das wenigstens eine Sicherheitsmerkmal und die reflexionsmindernde Struktur in nur einer Schicht ausgebildet sind. Mit Bezug auf Fig. 9 wird die Herstellung und der Aufbau einer solchen Ausführungsform beschrieben. Der in Fig. 9 gezeigte Aufbau ähnelt dem in Fig. 3 dargestellten Aufbau. Auch bei der Ausführungsform der Fig. 9 ist das Sicherheitselement mittels einer Kleberschicht 16 mit dem Substrat verbunden, das im vorliegenden Fall als Banknotenpapier 14 ausgebildet ist. Das Sicherheitselement stellt wiederum ein auf das Banknotenpapier 14 aufgeklebtes Folientransferelement 130 beliebiger Form dar, insbesondere kann es sich auch um einen sogenannten "Folienpatch" handeln. Das Folientransferelement 130 weist einen Merkmalsbereich 132 auf, der mit einem optisch variablen Sicherheitsmerkmal, wie etwa einem metallisierten Hologramm oder einer anderen hologrammähnlichen Beugungsstruktur, versehen ist. In einem Neutralbereich 134 außerhalb des Merkmalsbereichs 132 enthält das Folientransferelement 130 keine optisch variablen Sicherheitsmerkmale.

Das Folientransferelement 130 der Fig. 9 enthält eine transparente Trägerfolie 160, auf deren Oberseite im Unterschied zu der in Fig. 3 gezeigten Ausführungsform nur eine einzige Prägelackschicht 162 aufgebracht ist. In die Prägelackschicht 162 wurde im Merkmalsbereich 132 eine gewünschte Hologrammstruktur 164 und im Neutralbereich 134 eine streuende Mattstruktur 150 eingeprägt. Um das Hologrammrelief 164 zu metallisieren kann z. B. wie folgt verfahren werden: In einem ersten Schritt wird in denjenigen Bereichen, in denen keine Metallisierung vorgesehen ist, im vorliegenden Fall insbesondere die Neutralbereiche 134, eine als "Waschfarbe" bezeichnete, pigmenthaltige Druckfarbe aufgebracht. Sodann wird die Oberfläche des mit der Waschfarbe versehenen Sicherheitselements vollflächig, d.h. den Merkmalsbereich 132 und den Neutralbereich 134 umfassend, metallisiert, z. B. durch Bedampfung. Sodann wird die Metallisierung durch Auswaschen der Druckfarbe und der darüberliegenden Metallisierung wieder entfernt, so dass im Ergebnis lediglich das im Merkmalsbereich 132 angeordnete Hologrammrelief 164 eine Metallisierung aufweist. Details des vorstehend beschriebenen, sogenannten "Waschverfahrens" sind beispielsweise der WO 99/13157 zu entnehmen.

Selbstverständlich können metallisierte und metallfreie Bereiche aber auch durch andere Verfahren, beispielsweise durch Ätzen, erzeugt werden.

Im Unterschied zu der in Fig. 3 gezeigten Ausführungsform, bei der das Sicherheitsmerkmal und die reflexionsmindernde Struktur in verschiedenen Schichten, insbesondere verschiedenen Prägelackschichten, ausgebildet sind, wird das Sicherheitsmerkmal 164 des Merkmalsbereichs 132 und die reflexionsmindernde Mattstruktur 150 des Neutralbereichs 134 in nur einer einzigen Schicht ausgebildet. Vorteilhafterweise kann bei der Ausführungsform der Fig. 9 deshalb die Prägung der Strukturen in den Bereichen 132 und 134 gleichzeitig mit einem entsprechend ausgebildeten Prägewerkzeug erfolgen. Ferner kann auf die Auftragung einer zweiten Prägelackschicht im Unterschied zur Ausführung gemäß Fig. 3 verzichtet werden.

Das Sicherheitselement der Fig. 9 weist eine reflexionsminderne Mattstruktur 150 auf, die entsprechend der reflexionsmindernden Mattstruktur 50 des Sicherheitselements 30 der Fig. 3 offen liegt. Während das Hologrammrelief 64 des Sicherheitselements 30 allerdings durch die zweite Prägelackschicht 66 vor Manipulationsversuchen geschützt ist, liegt die Hologrammstruktur 164 des Sicherheitselements 130 aber ebenfalls offen. Um Manipulationsversuche zu unterbinden, kann auf verhältnismäßig einfache Weise das Hologrammrelief 164 im Merkmalsbereich 132 mit einer zusätzlichen Schutzschicht, beispielsweise einem aufgedruckten Schutzlack, versehen werden. Eine solche Schutzschicht ist bei dem in Fig. 9 gezeigten Folientransferelement 130 allerdings nicht weiter dargestellt.

Selbstverständlich können Manipulationsversuche auch dadurch unterbunden werden, dass das Sicherheitselement und die reflexionsmindernde Struktur entsprechend des Sicherheitselements gemäß Fig. 9 in einer einzigen Schicht angeordnet sind, allerdings nicht, wie in Fig. 9 gezeigt, offen liegen, sondern entsprechend der in Fig. 2 gezeigten Ausführungsform mittels einer Kleberschicht 16 auf das Substrat aufgebracht sind. Bei einer solchen nicht näher gezeigten Ausführungsform, sind das optisch variable Sicherheitsmerkmal und die reflexionsmindernde Struktur letztlich zwischen Substrat 14 und Trägerfolie angeordnet und damit weitestgehend vor Fälschungsversuchen geschützt.

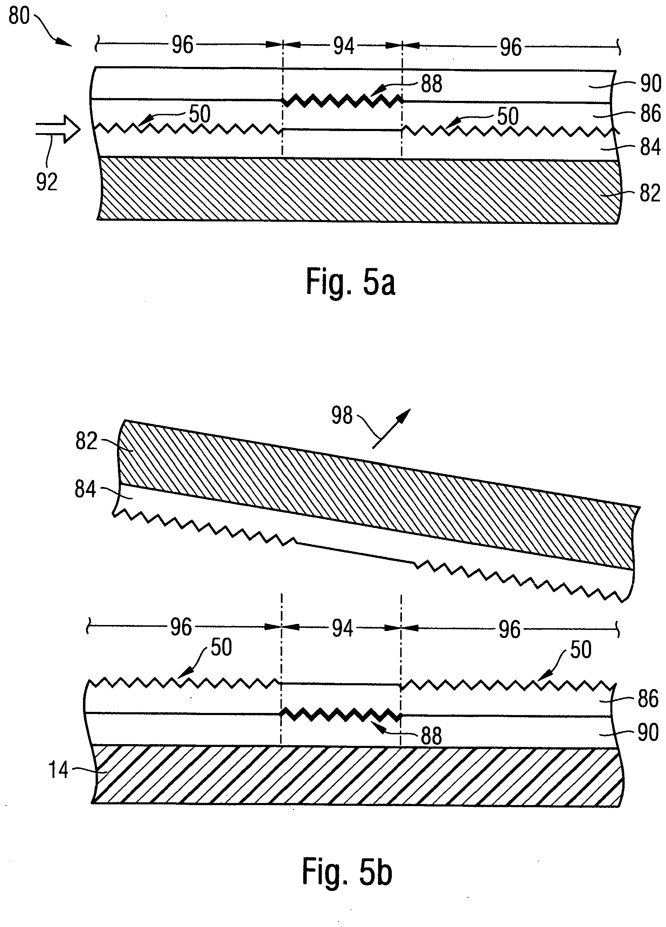

Soll die Trägerfolie des reflexionsverminderten Sicherheitselements nach der Übertragung nicht auf der Banknote verbleiben, so kann beispielsweise wie folgt vorgegangen werden: Mit Bezug auf die Darstellung der Fig. 5(a) wird auf eine Trägerfolie 82 zunächst eine gut auf der Trägerfolie haftende Prägelackschicht 84 aufgebracht und die Prägelackschicht 84 in den gewünschten Neutralbereichen 96 in der bereits beschriebenen Art mit einer Mattstruktur 50 versehen. Über die strukturierte Prägelackschicht 84 wird dann eine zweite Lackschicht 86 durch Beschichtung angeordnet und in einem Merkmalsbereich 94 mit einem gewünschten Hologrammrelief 88 durch Prägung versehen, metallisiert und gegebenenfalls für die Ausbildung von Negativinformationen teilweise demetallisiert.

Der zweite Lack 86 wird dabei so gewählt oder wird in einer solchen Weise aufgebracht, dass er nur eine geringe Haftung zum ersten Lack 84 aufweist. Dies kann beispielsweise durch geeignete Abstimmung der Lackmaterialien und/oder durch geeignet gewählte Bedingungen beim Aufbringen erreicht werden. Anschließend wird der erzeugte Schichtverbund auf seiner Oberseite mit geeigneten Primern, Schutzlackschichten und Klebstoffschichten 90 für die Übertragung auf ein gewünschtes Zielsubstrat versehen. Aufgrund der geringen Haftung der zweiten Lackschicht 86 weist das Transferelement 80 eine Sollablösefläche 92 zwischen den beiden Lackschichten 84 und 86 auf.

Nun wird das Transferelement 80 über die Klebstoffschicht 90 auf das Zielsubstrat 14 übertragen und die Trägerfolie 82 abgezogen, wie durch das Bezugszeichen 98 angezeigt. Wegen der guten Haftung zwischen dem erstem Lack 84 und der Trägerfolie 82, und der geringen Haftung zwischen dem ersten 84 und dem zweiten Lack 86, löst sich der Schichtverbund von der Trägerfolie 82 gerade an der Sollablösefläche 92 ab, wie in Fig.5(b) dargestellt. Auf dem Zielsubstrat 14 verbleibt somit nur die zweite Prägelackschicht 86, die an ihrer Unterseite das Hologramm 88 des Merkmalsbereichs 94 und an ihrer Oberseite die reflexionsmindernde Mattstruktur 50 des Neutralbereichs 96 trägt.

Als Materialien für die erste und zweite Lackschicht 84, 86 kommen insbesondere thermoplastisch prägbare Lackschichten oder UV-härtbare Lackschichten infrage. Bei letzteren kann die Stärke der Haftung zwischen den Lackschichten bzw. zwischen Lackschicht und Trägerfolie beispielsweise über den Grad der UV-Aushärtung der Lackschichten eingestellt werden.

Durch die bei Fig. 5 beschriebene Übertragung der Schichtenfolge ohne verbleibende Trägerfolie wird vor allem bei Papiersubstraten eine bessere Planlage des Papier-Folien-Verbundes, insbesondere bei wechselnden Luftfeuchtigkeitsbedingungen, erreicht.

Während bei der in Fig. 5 gezeigten Ausführungsform das Sicherheitsmerkmal und die reflexionsmindernde Struktur in zwei verschiedenen Schichten ausgebildet sind, ist es, wie bereits oben mit Bezug auf Fig. 9 erwähnt, auch möglich, Sicherheitselement und reflexionsmindernde Struktur in einer einzigen Schicht anzuordnen. Ein solches Sicherheitselement ist in Fig. 10 gezeigt. Das Sicherheitselement 140 ist wiederum über eine Klebstoffschicht 190 auf dem Substrat 14 aufgebracht. Selbstverständlich kann die Klebstoffschicht 190 auch noch weitere gegebenenfalls erforderliche Primer- oder Funktionsschichten umfassen. Wie weiter Fig. 10 zu entnehmen ist, wurden die Beugungsstruktur und die reflexionsmindernde Mattstruktur in nur einer Schicht, insbesondere einer Prägelackschicht 186, ausgebildet. Wie mit Bezug auf Fig. 9 beschrieben, ist die Beugungsstruktur 188 in der Regel mit einer dünnen Metallschicht versehen, die wiederum mit dem sogenannten "Waschverfahren" hergestellt werden kann. Wie mit Bezug auf Fig. 5 beschrieben, wird auch das Sicherheitselement 140 gemäß Fig. 10 durch ein Transferverfahren auf das Substrat 14 aufgebracht. Ein solches Transferverfahren und die dazu erforderlichen Transfermaterialien sind dem Fachmann bekannt, so dass mit Bezug auf die Ausführungsform der Fig. 10 nicht näher darauf eingegangen wird. Im Wesentlichen entspricht das Transferverfahren der mit Bezug auf Fig. 5 beschriebenen und erläuterten Vorgehensweise.

Das Transferelement 140 weist, wie auch das Transferelement der Fig. 5, keine Trägerfolie mehr auf, ist also unmittelbar auf dem Substrat 14 über die Kleberschicht 190 angeordnet. Des Weiteren sind die Strukturen 188 und 150 des Merkmalsbereichs 194 bzw. der Neutralbereiche 196 vor Manipulationsversuchen weitestgehend geschützt, da die Strukturen 188 und 150 zwischen Substrat 14 und Schicht 186 angeordnet sind. Ferner ist noch anzumerken, dass das Sicherheitselement 140 der Fig. 10 mit Vorteil als Patch oder Streifen in einem keine durchgehende Öffnung aufweisenden Bereich des Wertdokuments angeordnet ist.

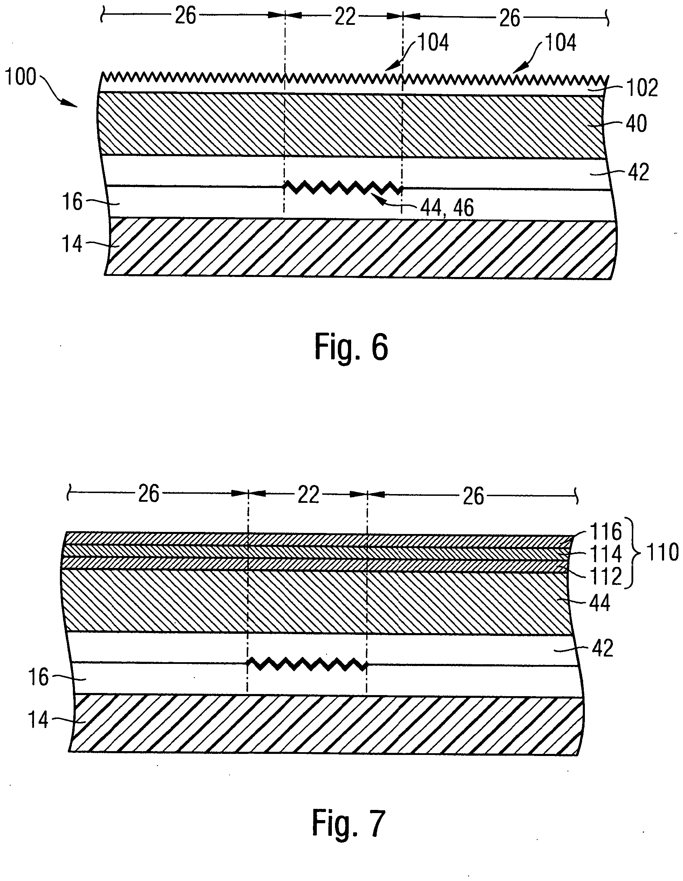

Als reflexionsmindernde Strukturen können anstelle von lichtstreuenden Strukturen auch nicht streuende Entspiegelungsschichten eingesetzt werden, wie nunmehr mit Bezug auf die Figuren 6 und 7 beschrieben. Diese nicht streuend wirkenden Entspiegelungsschichten haben den Vorteil, dass sie auch vollflächig auf das Sicherheitselement aufgebracht werden können, ohne dass auf die genaue Anordnung der optisch variablen Sicherheitsmerkmale Rücksicht genommen werden muss. Eine vollflächige Entspiegelung der Oberfläche eines Foliensicherheitselements kann vielmehr die Erkennbarkeit der Sicherheitsmerkmale der Merkmalsbereiche sogar verbessern, da die optisch variablen Effekte dann weniger von Lichtreflexionen an der glatten Folienoberfläche gestört werden können.

Mit Bezug zunächst auf Fig. 6 ist ein erfindungsgemäßes Folien-Sicherheitselement 100 gezeigt, das über eine Kleberschicht 16 auf das Substrat 14 eines Wertdokuments aufgebracht ist. Das Foliensicherheitselement 100 enthält eine transparente PET-Trägerfolie 40, die auf ihrer Unterseite in der bereits beschriebenen Art mit einer geprägten und metallisierten Hologrammstruktur 44, 46 versehen ist.

Auf der Oberseite der Trägerfolie 40 ist als reflexionsmindernde Struktur vollflächig eine Prägeschicht 102 mit einer geprägten sägezahnartigen Reliefstruktur 104 einer Strukturgröße von etwa 300 nm aufgebracht. Für einfallendes sichtbares Licht wirkt eine solche mikrostrukturierte Oberfläche wie ein effektives Medium mit einem Brechungsindexgradient senkrecht zur Schichtdicke. Die mikrostrukturierte Oberfläche verhält sich dabei schichtweise wie ein homogenes Medium, dessen effektiver Brechungsindex durch den jeweiligen Füllfaktor der Teilschicht, also den relativen Anteil von Lackmaterial und Luft, bestimmt ist. Aufgrund des senkrecht zur Schichtdicke von 1 auf 0 abnehmenden Füllfaktors verringert sich der effektive Brechungsindex der Prägeschicht 102 von dem Brechungsindex des Lacks, der typischerweise im Bereich von n = 1,3 bis n = 1,6 liegt, kontinuierlich bis auf den Brechungsindex der umgebenden Luft, also n = 1.

Anstelle der dreieckigen Reliefstruktur 104 kann auch eine andere regelmäßige oder unregelmäßige Anordnung von Prägestrukturen nahezu beliebiger Reliefform verwendet werden, solange die Strukturgröße im Wesentlichen kleiner als die Lichtwellenlänge ist. Neben dem in Fig. 6 beispielhaft gezeigten Dreiecksprofil kommen auch Rechteckprofile oder Strukturen mit zufälligem Profil in Betracht. Der genaue Brechungsindexverlauf hängt selbstverständlich von der Form, Größe und Anordnung der Mikroreliefstrukturen ab. Die lateralen Abmessungen und Höhen der Prägestrukturen liegen typischerweise zwischen etwa 100 nm und etwa 1 µm, vorzugsweise zwischen etwa 100 nm und etwa 500 nm.

Zur Entspiegelung können anstelle von Reliefstrukturen auch dielektrische Schichten verwendet werden. Im einfachsten Fall ist das Sicherheitselement dazu vollflächig mit einer niedrigbrechenden dielektrischen Schicht versehen, deren Brechungsindex zwischen dem Brechungsindex der zu entspiegelnden Folie bzw. Lackschicht und dem Brechungsindex von Luft liegt. Beim Einsatz einer Einzelschicht ist die niedrigbrechende dielektrische Schicht vorzugsweise eine λ/4-Schicht und weist einen Brechungsindex auf, der nahe an der Quadratwurzel des Brechungsindex der zu entspiegelnden Folie bzw. Lacks liegt. Für die üblichen Folien- bzw. Lackmaterialien bieten sich dazu insbesondere MgF₂-Schichten an, die einen Brechungssindex von n = 1, 38 aufweisen. Die Reflektivität der zu entspiegelnden Folie kann damit von etwa 4 % auf etwa 1 % reduziert werden.

Noch stärkere Reflexionsminderungen sind durch den Einsatz von dielektrischen Schichtenfolgen möglich, die aus alternierend hoch- und niedrigbrechendem dielektrischem Material gebildet sind, wie in dem Ausführungsbeispiel der Fig. 7 gezeigt. Die Gestaltung der Fig. 7 unterscheidet sich von dem Ausführungsbeispiel der Fig. 6 dadurch, dass die Entspiegelungsschicht durch eine vollflächig aufgebrachte dielektrische Schichtenfolge 110 gebildet ist. Die Schichtenfolge 110 besteht aus drei Teilschichten, nämlich einer hochbrechenden Titandioxid(TiO₂)-Schicht 112, einer niedrigbrechenden MgF₂-Schicht 114 und einer weiteren hochbrechenden TiO₂-Schicht 116.

Für die hochbrechenden Schichten kann anstelle von TiO₂ beispielsweise auch Zinksulfid (ZnS), für die niedrigbrechenden Schichten anstelle von MgF₂ auch Siliziumdioxid (SiO₂) eingesetzt werden. Für eine besonders starke Verminderung der Reflektivität kann auch eine Schichtenfolge mit mehr als drei, beispielsweise mit fünf Teilschichten eingesetzt werden. Die Reflektivität der Oberfläche kann durch den Einsatz derartiger dielektrischer Schichtenfolgen auf weniger als 0,1 % im gesamten sichtbaren Spektralbereich reduziert werden.

Beispielsweise können erfindungsgemäße dielektrische Schichtaufbauten folgende Schichtabfolgen aufweisen, wobei die Schichtdicken für eine zentrale Wellenlänge von λ =550 nm angegeben sind.

### Beispiel 1:

Schichtaufbau aus einer dielektrischen Schicht mit n = 1,38 und einer Dicke n*d von λ/4 (d etwa 100 nm).

### Beispiel 2:

Schichtaufbau aus zwei dielektrischen Schichten mit n₁ = 1,7, n₂ = 1,38 und Dicken von n₁*d₁ = λ/4 (d₁ etwa 80 nm) bzw. n₂*d₂ = λ/4 (d₂ etwa 100 nm).

### Beispiel 3:

Schichtaufbau aus drei dielektrischen Schichten mit n₁ = 1,7, n₂ = 2,1 und n₃ = 1,38 und Dicken von n₁*d₁ = λ/4 (d₁ etwa 80 nm) bzw. n₂*d₂ = λ/2 (d₂ etwa 130 nm) und n₃*d₃ = λ/4 (d₃ etwa 100 nm).

In allen Ausgestaltungen können die reflexionsmindernden Strukturen auch partiell in Form von Mustern, Zeichen oder einer Codierung aufgebracht werden oder mit Aussparungen in Form von Mustern, Zeichen oder einer Codierung versehen werden. Zur Illustration zeigt Fig. 8 eine Abwandlung des Folienstreifens 20 der Fig. 1 in Form eines Folienstreifens 120 mit zwei Merkmalsbereichen 22, 24, die, wie in Fig. 1 gezeigt, jeweils mit einem optisch variablen Sicherheitsmerkmal 23 bzw. 25 versehen sind.

In dem außerhalb der Merkmalsbereiche liegenden Neutralbereich 26 ist der Folienstreifen 120 mit einer reflexionsmindernden Struktur 122, beispielsweise einer Streustruktur oder einer Entspiegelungsschicht der oben beschriebenen Art versehen. Handelt es sich bei der reflexionsmindernden Struktur 122 um eine nicht streuende Entspiegelungsschicht, so kann sich diese auch über die Merkmalsbereiche 22, 24 erstrecken.

Bei dem in Fig. 8 dargestellten Ausführungsbeispiel enthält die reflexionsmindernde Struktur 122 Aussparungen 124 in Form der Ziffernfolge "100", die die Denomination der Banknote darstellt. In Bereich der Aussparungen 124 entfaltet die reflexionsmindernde Struktur 122 keine Wirkung, dort sind somit unter bestimmten Betrachtungsbedingungen die zuvor beschriebene Glanzwirkung und insbesondere die gerichtete Reflexion der Trägerfolie 40 im Glanzwinkel erkennbar. Die Aussparungen 124 erzeugen auf diese Weise ein verstecktes und nur aus geeigneten Betrachtungsrichtungen schwach sichtbares Bild, das als zusätzliches Echtheitskennzeichen dienen kann.

## Patentansprüche

1. Sicherheitselement zur Absicherung von Sicherheitspapieren, Wertdokumenten und dergleichen, mit einer Schichtenfolge, in der in Aufsicht Merkmalsbereiche und Neutralbereiche erkennbar sind, wobei die Merkmalsbereiche zumindest ein optisch variables Sicherheitsmerkmal enthalten, und in den Neutralbereichen keine optisch variablen Sicherheitsmerkmale vorliegen, wobei das Sicherheitselement zumindest in den Neutralbereichen mit einer reflexionsmindernden Struktur versehen ist, **dadurch gekennzeichnet, dass** die reflexionsmindernde Struktur durch eine Streustruktur gebildet ist, wobei das Sicherheitselement nur in den Neutralbereichen, nicht aber in den Merkmalsbereichen mit der Streustruktur versehen ist, oder durch eine Entspiegelungsschicht gebildet ist, wobei die Entspiegelungsschicht sowohl in den Neutralbereichen als auch in den Merkmalsbereichen vorliegt, und **dadurch, dass** die optisch variablen Sicherheitsmerkmale der Merkmalsbereiche und die reflexionsmindernde Struktur der Neutralbereiche in auf derselben Seite einer Trägerfolie angeordneten verschiedenen Schichten ausgebildet sind,
oder **dass** die optisch variablen Sicherheitsmerkmale der Merkmalsbereiche und die reflexionsmindernde Struktur der Neutralbereiche in auf gegenüberliegenden Seiten einer Trägerfolie angeordneten Schichten ausgebildet sind.

2. Sicherheitselement nach Anspruch 1, **dadurch gekennzeichnet, dass** die Streustruktur durch eine geprägte Mattstruktur gebildet ist.

3. Sicherheitselement nach Anspruch 1 oder 2, **dadurch gekennzeichnet, dass** die Streustruktur durch eine insbesondere unregelmäßige Hügelstruktur gebildet ist, wobei die lateralen Abmessungen und Höhen der Hügel vorzugsweise jeweils zwischen 200 nm und 50 µm liegen, oder dass die Streustruktur durch eine unregelmäßige Anordnung von Gräben gebildet ist, wobei die Tiefen der Gräben vorzugsweise jeweils zwischen 50 nm und 10 µm liegen und die Häufigkeit der Gräben im Durchschnitt zwischen 10 pro µm und 0,1 pro µm liegt.

4. Sicherheitselement nach Anspruch 3, **dadurch gekennzeichnet, dass** die azimutale Orientierung der Gräben in der Ebene des Sicherheitselements zufällig verteilt ist, oder dass die azimutale Orientierung der Gräben in der Ebene des Sicherheitselements eine Vorzugsrichtung aufweist, so dass Teilbereiche der Streustruktur unter bestimmten Betrachtungsbedingungen spiegelnd wirken.

5. Sicherheitselement nach Anspruch 1 oder 2, **dadurch gekennzeichnet, dass** die Streustruktur durch ein Subwellenlängengitter oder ein stochastisches Subwellenlängengitter gebildet ist.

6. Sicherheitselement nach Anspruch 1, **dadurch gekennzeichnet, dass** die Entspiegelungsschicht durch eine Prägeschicht mit senkrecht zur Schichtdicke kontinuierlich abnehmendem effektivem Brechungsindex gebildet ist, wobei die Entspiegelungsschicht bevorzugt durch eine mikrostrukturierte Reliefstruktur mit einer Strukturgröße im Wesentlichen unterhalb der Lichtwellenlänge gebildet ist, und wobei die lateralen Abmessungen und Höhen der Reliefelemente insbesondere zwischen 100 nm und 1 µm, vorzugsweise zwischen 100 nm und 500 nm liegen.

7. Sicherheitselement nach Anspruch 1, **dadurch gekennzeichnet, dass** die Entspiegelungsschicht durch eine durch Ionenbeschuss erzeugte Brechzahl-Gradientenschicht oder durch eine durch Ionenbeschuss erzeugte Subwellenlängenstruktur gebildet ist.

8. Sicherheitselement nach Anspruch 1, **dadurch gekennzeichnet, dass** die Entspiegelungsschicht durch eine durch Aufbringen einer dielektrischen Schicht und nachfolgenden Ionenbeschuss erzeugte Subwellenlängenstruktur gebildet ist.

9. Sicherheitselement nach Anspruch 1, **dadurch gekennzeichnet, dass** die Entspiegelungsschicht durch eine dielektrische Beschichtung gebildet ist, wobei die dielektrische Beschichtung bevorzugt durch eine λ/4-Schicht aus einem niedrigbrechenden dielektrischen Material, insbesondere durch eine λ/4-Schicht aus Magnesiumfluorid (MgF₂) oder Siliziumdioxid (SiO₂), oder durch eine Schichtenfolge aus alternierend hoch- und niedrigbrechenden dielektrischen Materialien gebildet ist.

10. Sicherheitselement nach wenigstens einem der Ansprüche 1 bis 9, **dadurch gekennzeichnet, dass** die reflexionsmindernde Struktur partiell in Form von Mustern, Zeichen oder einer Codierung aufgebracht ist oder mit Aussparungen in Form von Mustern, Zeichen oder einer Codierung versehen ist, und/oder dass die Merkmalsbereiche als optisch variable Sicherheitsmerkmale ein oder mehrere Sicherheitsmerkmale aufweisen, die ausgewählt sind aus der Gruppe, bestehend aus Hologrammen, hologrammähnlichen Beugungsstrukturen, Beugungsmustern, Strukturen mit Farbkippeffekt, Kinoforme, Strukturen mit einem Mikrolinseneffekt und Strukturen mit isotropem oder anisotropem Streuungseffekt oder mit anderen Interferenzeffekten.

11. Verfahren zum Herstellen eines Sicherheitselements für Sicherheitspapiere, Wertdokumente und dergleichen, bei dem
- eine Schichtenfolge mit in Aufsicht erkennbaren Merkmalsbereichen und Neutralbereichen erzeugt wird, wobei die Merkmalsbereiche mit zumindest einem optisch variablen Sicherheitsmerkmal erzeugt werden und in den Neutralbereichen keine optisch variablen Sicherheitsmerkmale erzeugt werden, **dadurch gekennzeichnet, dass**
- das Sicherheitselement zumindest in den Neutralbereichen mit einer reflexionsmindernden Struktur versehen wird, wobei die reflexionsmindernde Struktur durch eine Streustruktur gebildet wird, wobei das Sicherheitselement nur in den Neutralbereichen, nicht aber in den Merkmalsbereichen mit der Streustruktur versehen wird, oder durch eine Entspiegelungsschicht gebildet wird, wobei die Entspiegelungsschicht sowohl in den Neutralbereichen als auch in den Merkmalsbereichen vorliegt,
- wobei eine Trägerfolie bereitgestellt wird und auf gegenüberliegenden Seiten der Trägerfolie eine erste bzw. eine zweite Schicht aufgebracht werden, wobei die optisch variablen Sicherheitsmerkmale der Merkmalsbereiche in der ersten Schicht und die reflexionsmindernde Struktur der Neutralbereiche in der gegenüberliegenden zweiten Schicht ausgebildet werden,
oder wobei eine Trägerfolie bereitgestellt wird, auf die Trägerfolie eine erste Schicht aufgebracht wird, in der die optisch variablen Sicherheitsmerkmale der Merkmalsbereiche ausgebildet werden, und über die erste Schicht eine zweite Schicht aufgebracht wird, in der die reflexionsmindernde Struktur der Neutralbereiche ausgebildet wird.

12. Verfahren nach Anspruch 11, **dadurch gekennzeichnet, dass** als Streustruktur eine geprägte Mattstruktur gebildet wird oder durch Ionenbeschuss als Entspiegelungsschicht eine Brechzahl-Gradientenschicht erzeugt wird, indem mindestens eine Oberfläche mittels eines Argon/Sauerstoff-Plasmas unter Ausbildung einer Brechzahl-Gradientenschicht modifiziert wird.

13. Verfahren nach wenigstens einem der Ansprüche 11 bis 12, **dadurch gekennzeichnet, dass** das Sicherheitselement zunächst mit einer Aufnahmeschicht für die Aufnahme der reflexionsmindernden Struktur versehen wird, das Sicherheitselement dann auf ein Zielsubstrat übertragen wird, und die Aufnahmeschicht nach der Übertragung des Sicherheitselements auf das Zielsubstrat mit der reflexionsmindernden Struktur versehen wird.

14. Wertdokument, wie Banknote, Pass, Urkunde, Ausweiskarte oder dergleichen, mit einem Sicherheitselement nach einem der Ansprüche 1 bis 10 oder mit einem nach einem der Ansprüche 11 bis 13 herstellbaren Sicherheitselement.

## Claims

1. A security element for securing security papers, value documents and the like, having a layer sequence in which feature regions and neutral regions are perceptible in top view, the feature regions including at least one optically variable security feature, and no optically variable security features being present in the neutral regions, the security element being furnished with a reflection-reducing structure at least in the neutral regions, **characterized in that**
the reflection-reducing structure is formed by a scattering structure, the security element being furnished with the scattering structure only in the neutral regions, but not in the feature regions, or is formed by an antireflection layer, the antireflection layer being present both in the neutral regions and in the feature regions, and **in that** the optically variable security features of the feature regions and the reflection-reducing structure of the neutral regions are formed in different layers arranged on the same side of a carrier foil,
or **that** the optically variable security features of the feature regions and the reflection-reducing structure of the neutral regions are formed in layers arranged on opposing sides of a carrier foil.

2. The security element according to claim 1, **characterized in that** the scattering structure is formed by an embossed matte structure.

3. The security element according to claim 1 or 2, **characterized in that** the scattering structure is formed by an especially irregular mound structure, the lateral dimensions and heights of the mounds preferably being, in each case, between 200 nm and 50 µm, or that the scattering structure is formed by an irregular arrangement of troughs, the depths of the troughs preferably being, in each case, between 50 nm and 10 µm, and the frequency of the troughs being, on average, between 10 per µm and 0.1 per µm.

4. The security element according to claim 3, **characterized in that** the azimuthal orientation of the troughs in the plane of the security element is distributed randomly, or that the azimuthal orientation of the troughs in the plane of the security element has a preferred direction, such that sub-regions of the scattering structure have a reflective effect under certain viewing conditions.

5. The security element according to claim 1 or 2, **characterized in that** the scattering structure is formed by a subwavelength grating or a stochastic subwavelength grating.

6. The security element according to claim 1, **characterized in that** the antireflection layer is formed by an embossing layer having a continuously decreasing effective refractive index perpendicular to the layer thickness, the antireflection layer preferably being formed by a microstructured relief structure having a structure size substantially below the light wavelength, and the lateral dimensions and heights of the relief elements especially being between 100 nm and 1 µm, preferably between 100 nm and 500 nm.

7. The security element according to claim 1, **characterized in that** the antireflection layer is formed by a refractive index gradient layer produced by ion bombardment or by a subwavelength structure produced by ion bombardment.

8. The security element according to claim 1, **characterized in that** the antireflection layer is formed by a subwavelength structure produced by application of a dielectric layer and subsequent ion bombardment.

9. The security element according to claim 1, **characterized in that** the antireflection layer is formed by a dielectric coating, the dielectric coating preferably being formed by a λ/4 layer composed of a low-index dielectric material, especially by a λ/4 layer composed of magnesium fluoride (MgF₂) or silicon dioxide (SiO₂), or by a layer sequence composed of alternating high- and low-index dielectric materials.

10. The security element according to at least one of claims 1 to 9, **characterized in that** the reflection-reducing structure is applied partially in the form of patterns, characters or a code or is furnished with gaps in the form of patterns, characters or a code, and/or that the feature regions comprise, as optically variable security features, one or more security features that are selected from the group consisting of holograms, hologram-like diffraction structures, diffraction patterns, structures having a color-shift effect, kinoforms, structures having a microlens effect and structures having an isotropic or anisotropic scattering effect or having other interference effects.

11. A method for manufacturing a security element for security papers, value documents and the like, in which
- a layer sequence having feature regions and neutral regions that are perceptible in top view is produced, the feature regions being produced having at least one optically variable security feature and no optically variable security features being produced in the neutral regions, **characterized in that**
- the security element is furnished with a reflection-reducing structure at least in the neutral regions, the reflection-reducing structure being formed by a scattering structure, the security element being furnished with the scattering structure only in the neutral regions, but not in the feature regions, or being formed by an antireflection layer, the antireflection layer being present both in the neutral regions and in the feature regions,
- a carrier foil being provided and a first and a second layer being applied on opposing sides of the carrier foil, respectively, the optically variable security features of the feature regions being formed in the first layer, and the reflection-reducing structure of the neutral regions in the opposing second layer,
or a carrier foil being provided, there being applied to the carrier foil a first layer, in which the optically variable security features of the feature regions are formed, and there being applied over the first layer a second layer, in which the reflection-reducing structure of the neutral regions is formed.

12. The method according to claim 11, **characterized in that,** as the scattering structure, an embossed matte structure is formed, or as the antireflection layer, a refractive index gradient layer is produced by ion bombardment **in that** at least one surface is modified by means of an argon/ oxygen plasma, forming a refractive index gradient layer.

13. The method according to at least one of claims 11 to 12, **characterized in that** the security element is first furnished with a receiving layer for receiving the reflection-reducing structure, the security element is then transferred to a target substrate, and after the transfer of the security element to the target substrate, the receiving layer is furnished with the reflection-reducing structure.

14. A value document, such as a banknote, passport, certificate, identity card or the like, having a security element according to one of claims 1 to 10 or having a security element that is manufacturable according to one of claims 11 to 13.

## Revendications

1. Elément de sécurité pour sécuriser des papiers de sécurité, des documents de valeur et éléments analogues, avec une succession de couches, dans laquelle des zones caractéristiques et des zones neutres vues de dessus peuvent être identifiées, sachant que les zones caractéristiques contiennent au moins une caractéristique de sécurité optiquement variable et qu'aucune caractéristique de sécurité optiquement variable n'est présente dans les zones neutres, sachant que l'élément de sécurité est doté au moins dans les zones neutres d'une structure antireflet,
**caractérisé en ce que**
la structure antireflet est formée par une structure de dispersion, sachant que l'élément de sécurité est doté de la structure de dispersion uniquement dans les zones neutres, mais pas dans les zones caractéristiques ou est formé par une couche antireflet, sachant que la couche antireflet est présente tant dans les zones neutres que dans les zones caractéristiques,
et **en ce que** les caractéristiques de sécurité optiquement variables des zones caractéristiques et la structure antireflet des zones neutres sont constituées dans des couches différentes disposées sur le même côté d'une feuille de support,
ou **en ce que** les caractéristiques de sécurité optiquement variables des zones caractéristiques et la structure antireflet des zones neutres sont constituées dans des couches disposées sur les côtés opposés d'une feuille de support.

2. Elément de sécurité selon la revendication 1, **caractérisé en ce que** la structure de dispersion est formée par une structure mate gaufrée.

3. Elément de sécurité selon la revendication 1 ou 2, **caractérisé en ce que** la structure de dispersion est formée par une structure à protubérances en particulier irrégulière, sachant que les dimensions latérales et les hauteurs des protubérances se situent de préférence respectivement entre 200 nm et 50 µm ou **en ce que** la structure de dispersion est formée par une disposition irrégulière de creux, sachant que les profondeurs des creux se situent de préférence respectivement entre 50 nm et 10 µm et la fréquence des creux se situe en moyenne entre 10 par µm et 0,1 par µm.

4. Elément de sécurité selon la revendication 3, **caractérisé en ce que** l'orientation azimutale des creux dans le plan de l'élément de sécurité est répartie au hasard ou **en ce que** l'orientation azimutale des creux dans le plan de l'élément de sécurité comporte une direction préférentielle de telle manière que des zones partielles de la structure de dispersion agissent de façon réfléchissante dans certaines conditions d'observation.

5. Elément de sécurité selon la revendication 1 ou 2, **caractérisé en ce que** la structure de dispersion est formée par une grille à sous-longueur d'ondes ou une grille à sous-longueur d'ondes stochastique.

6. Elément de sécurité selon la revendication 1, **caractérisé en ce que** la couche antireflet est formée par une couche de gaufrage avec un indice de réfraction effectif diminuant en continu perpendiculairement à l'épaisseur de la couche, sachant que la couche antireflet est formée de préférence par une structure en relief microstructurée avec une taille de structure pour l'essentiel en dessous de la longueur d'ondes lumineuses et sachant que les dimensions latérales et les hauteurs des éléments en relief se situent en particulier entre 100 nm et 1 µm, de préférence entre 100 nm et 500 nm.

7. Elément de sécurité selon la revendication 1, **caractérisé en ce que** la couche antireflet est formée par une couche à gradient d'indice de réfraction produite par bombardement ionique ou par une structure de sous-longueur d'ondes produite par bombardement ionique.

8. Elément de sécurité selon la revendication 1, **caractérisé en ce que** la couche antireflet est formée par une structure de sous-longueur d'ondes produite par application d'une couche diélectrique et bombardement ionique ultérieur.

9. Elément de sécurité selon la revendication 1, **caractérisé en ce que** la couche antireflet est formée par un revêtement diélectrique, sachant que le revêtement diélectrique est formée de préférence par une couche λ/4 d'un matériau diélectrique à faible réfraction, en particulier par une couche λ/4 de fluorure de magnésium (MgF2) ou de dioxyde de silicium (SiO₂) ou par une succession de couches alternant en matériaux diélectriques à haute ou faible réfraction.

10. Elément de sécurité selon au moins l'une quelconque des revendications 1 à 9, **caractérisé en ce que** la structure antireflet est appliquée partiellement sous la forme de motifs, de signes ou d'une codification ou est dotée d' évidements sous la forme de motifs, de signes ou d'une codification et/ou **en ce que** les zones caractéristiques comportent une ou plusieurs caractéristiques de sécurité en tant que caractéristiques de sécurité optiquement variables, qui sont sélectionnées à partir du groupe composé d'hologrammes, de structures de diffraction analogues à des hologrammes, de motifs de diffraction, de structures avec effet de changement de couleur, de kinoformes, de structures avec un effet de microlentille et de structures avec effet de dispersion isotrope ou anisotrope ou avec d'autres effets d'interférence..

11. Procédé de fabrication d'un élément de sécurité pour des papiers de sécurité, des documents de valeur et éléments analogues, pour lequel
- une succession de couches est produite avec des zones caractéristiques et des zones neutres identifiables en vue de dessus, sachant que les zones caractéristiques sont produites avec au moins une caractéristique de sécurité optiquement variable et qu'aucune caractéristique de sécurité optiquement variable n'est produite dans les zones neutres, **caractérisé en ce que**
- l'élément de sécurité est doté d'une structure antireflet au moins dans les zones neutres, sachant que la structure antireflet est formée par une structure de dispersion, sachant que l'élément de sécurité est doté de la structure de dispersion uniquement dans les zones neutres, mais pas dans les zones caractéristiques ou est formée par une couche antireflet, sachant que la couche antireflet est présente aussi bien dans les zones neutres que dans les zones caractéristiques,
- sachant qu'une feuille de support est préparée et une première ou une deuxième couche sont appliquées sur les côtés opposés de la feuille de support, sachant que les caractéristiques de sécurité optiquement variables des zones caractéristiques sont constituées dans la première couche et la structure antireflet des zones neutres est constituée dans la deuxième couche opposée,
ou sachant qu'une feuille de support est préparée, une première couche est appliquée sur la feuille de support, dans laquelle sont constituées les caractéristiques de sécurité optiquement variables des zones caractéristiques et une deuxième couche est appliquée sur la première couche, dans laquelle la structure antireflet des zones neutres est constituée.

12. Procédé selon la revendication 11, **caractérisé en ce qu'**une structure matte gaufrée est formée en tant que structure de dispersion ou une couche à gradient d'indice de réfraction est produite par bombardement ionique en tant que couche antireflet, au moins une surface étant modifiée au moyen d'un plasma argon/ oxygène par formation d'une couche à gradient d'indice de réfraction.

13. Procédé selon au moins une quelconque des revendications 11 à 12, **caractérisé en ce que** l'élément de sécurité est doté d'abord d'une couche de réception pour recevoir la structure antireflet, l'élément de sécurité est ensuite transféré sur un substrat de destination et la couche de réception est dotée de la structure antireflet après transfert de l'élément de sécurité sur le substrat de destination.

14. Document de valeur, comme des billets de banque, un passeport, un document original, une carte d'identité ou éléments analogues, avec un élément de sécurité selon l'une quelconque des revendications 1 à 10 ou avec un élément de sécurité pouvant être réalisé selon l'une quelconque des revendication 11 à 13.
